# EUROPEAN PATENT APPLICATION

(11) **EP 4 459 760 A1**
(43) Date of publication of application: **06.11.2024**
(21) Application number: 21969686.1
(22) Date of filing: 31.12.2021
(51) Int. Cl.: H01M 50/20

(54) **SUPPORT, HOUSING, AND SOFT-PACK BATTERY MODULE**

(71) Applicant: AESC Dynamics Technology (Jiangsu) Ltd., 214443 Wuxi City, Jiangsu Province (CN); AESC Intelligent Innovation Dynamics Technology (Shanghai) Ltd., Shanghai 201315 (CN)
(72) Inventor: YANG, Mingping, Shanghai 200120 (CN)
(74) Representative: Becker, Eberhard
(86) International application number: PCT/CN2021/143624
(87) International publication number: WO 2023/123333

(57) **Abstract**

Provided are a support (1), a housing, and a soft-pack battery module; the cross-section of the support (1) has an 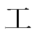 shape; the support (1) comprises an upper flat plate portion (11), a lower flat plate portion (12), and a connecting portion (13); the upper flat plate portion (11) is arranged to be used as an upper cover plate of a battery housing; the lower flat plate portion (12) and the upper flat plate portion (11) are arranged in parallel, and the lower flat plate portion (12) is arranged to be used as a lower cover plate of the battery housing; the two ends of the connecting portion (13) are respectively fixedly connected to the upper flat plate portion (11) and the lower flat plate portion (12).

## Description

### Technical Field

The present disclosure relates to the field of battery technology, for example, to a support, a housing and a pouch battery module.

### Description of Related Art

In related art, the traveling range of electric vehicles is getting longer. The industry is now pursuing how to improve the energy density of battery packs. Through module-free design for battery pack, it is possible to increase the energy density by about 30%. In the meantime, such design may considerably reduce electrical connectors, thereby reducing the energy loss in the battery pack and cost.

The housing of battery pack is generally composed of front and rear covers, left and right side panels, and upper and lower cover plates. The assembly is cumbersome and troublesome. In addition, battery cells or battery cell stacks are placed in the housing, and the size of the battery stacking direction is generally between 500mm and 800mm. The number of stacked battery cells is between 60 and 100, and since the stacked battery cells are not supported on the inside, which makes the overall rigidity of the battery pack poor, and the battery cells therein are easily deformed by force, which affects the performance of the battery pack.

### SUMMARY

The present disclosure provides a support, which may be applied to the housing of a battery, save the upper and lower cover plates, facilitates assembly, and provide support for the inside of the housing to improve the rigidity of the housing.

The present disclosure further provides a housing. By applying the above support, the overall rigidity is good, so the housing is not easily deformed, and is easy to assemble.

The present disclosure further provides a pouch battery module, which has good overall rigidity and stable performance by integrating the above housing.

An embodiment provides a support, the cross-section of the support is I-shaped, and the support includes: an upper flat part configured to be used as an upper cover plate for a housing of a battery; a lower flat part arranged in parallel with the upper flat part, the lower flat part is configured to be used as a lower cover plate of the housing of the battery; and a connecting part, the two ends of which are fixedly connected to the upper flat part and the lower flat part respectively.

An embodiment provides a housing, which includes a left side panel, a right side panel, a front cover, a rear cover and the above-mentioned support. The left side panel is welded to the first side of the support and forms a first accommodation cavity with the support. The second side plate is welded to the right side of the support and forms a second accommodation cavity with the support. The front cover and the rear cover are respectively welded to the front and rear ends of the support, and the first side of the support is opposite to the second side of the support.

An embodiment provides a pouch battery module, which includes a battery cell and the housing as described above. The first accommodation cavity and the second accommodation cavity are respectively provided with the battery cell, and the battery cell is a single cell or the battery cell is a cell stack.

### BRIEF DESCRIPTION OF THE DRAWINGS

FIG. 1 is a schematic structural view of one direction of support provided in an embodiment of the present disclosure.
FIG. 2 is a schematic structural view of another direction of support provided in an embodiment of the present disclosure.
FIG. 3 is an exploded schematic view of a battery module provided in an embodiment of the present disclosure.
FIG. 4 is a front view of a housing provided in an embodiment of the present disclosure.
FIG. 5 is a rear view of a housing provided in an embodiment of the present disclosure.
FIG. 6 is a schematic structural view of a rear connecting frame and a current collecting sampling plate provided in an embodiment of the present disclosure.
FIG. 7 is a schematic structural view of a rear connecting frame provided in an embodiment of the present disclosure.
FIG. 8 is a top view of a rear connecting frame provided in an embodiment of the present disclosure.

### Reference signs:

1. support; 11. upper flat part; 111. upper position-limiting protrusion; 12. lower flat part; 121. lower position-limiting protrusion; 13. connecting part; 14. coolant channel; 15. front protrusion; 16. rear protrusion; 17. insulating film; 2. left side panel; 3. rear side panel; 4. front cover; 41. front positioning slot; 5. rear cover; 51. rear positioning slot; 52. port; 6. front connecting frame; 61. front engaging slot; 7. rear connecting frame; 71. rear positioning block; 711. rear engaging slot; 72. positioning column; 73. embedding slot; 74. claw; 741. supporting main body; 7411. first supporting part; 7412. second supporting part; 742. clamping elastic piece; 7421. first elastic sheet; 7422. second elastic sheet; 8. current collecting sampling plate; 81. sampling protrusion; 82. positioning hole; 9. explosion-proof valve; 10. battery cell.

### DESCRIPTION OF THE EMBODIMENTS

In the description of the present disclosure, it should be noted that the terms "upper", "lower", "left", "right", "vertical", "horizontal", "inner", "outer", etc. indicate directions or the positional relationship is based on the orientation or positional relationship shown in the drawings, or the orientation or positional relationship that the product of the disclosure is generally placed in use, and is only for ease of describing the disclosure and simplifying the description, rather than indicating or implying that the mentioned device or elements must have a certain orientation, be constructed and operate in a certain orientation, and thus should not be construed as a limitation to the disclosure. In addition, the terms "first", "second", etc. are only used for distinguishing descriptions, and should not be construed as indicating or implying relative importance. In the description of the present disclosure, unless otherwise specified, "plurality" means two or more.

In the description of the present disclosure, it should be further indicated that, unless otherwise clearly specified and limited, the terms "disposed" and "connected" should be understood in a broad sense, for example, the above terms may refer to a fixed connection, a detachable connection, or integral formation; mechanical or electrical connection. Those of ordinary skill in the art can understand the specific meanings of the above terms in the present disclosure in specific situations.

In the present disclosure, unless otherwise clearly specified and limited, a first feature being "on" or "below" a second feature may indicate direct contact between the first and second features, and may also indicate that the first and second features are not in direct contact but are in indirect contact through another feature between them. Moreover, the first feature being "above", "over" and "on" the second feature indicates that the first feature is directly above and obliquely above the second feature, or merely indicates that the first feature is at a level higher than the second feature. The first feature being "below", "beneath" and "under" the second feature indicates that the first feature is directly below and obliquely below the second feature, or simply means that the first feature is at a level lower than the second feature.

### Embodiment 1

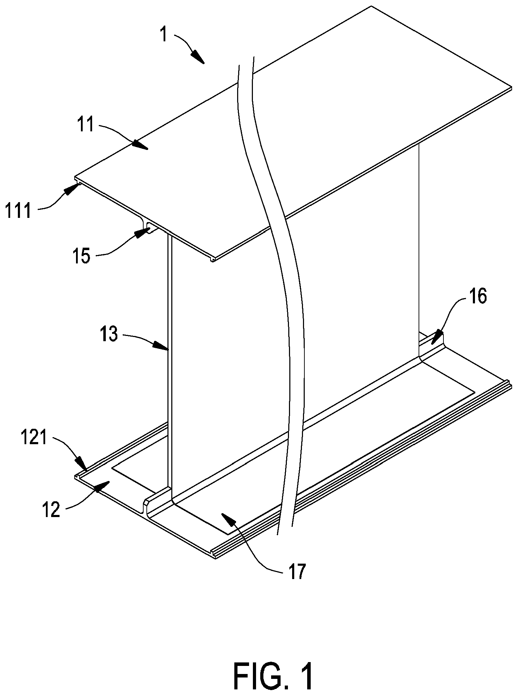

As shown in FIG. 1 to FIG. 2, this embodiment provides a support 1, the cross section of the support 1 is I-shaped. The support 1 includes an upper flat part 11, a lower flat part1 2 and a connecting part 13. The upper flat part 11 serves as the upper cover plate of the housing of the battery; the lower flat part 12 is arranged in parallel with the upper flat part 11, and the lower flat part 12 serves as the lower cover plate of the housing of the battery; two ends of the connecting part 13 are respectively fixedly connected with the upper flat part 11 and the lower flat part 12. When the support 1 cooperates with the left side panel 2, the right side panel 3, the front cover 4 and the rear cover 5 to form a housing, the connecting part 13 may serve as a support inside the housing, thus improving the rigidity of the housing, and the upper and lower cover plates may be omitted to facilitate assembly.

In an embodiment, the support 1 is an integrally formed structure. In other embodiments, the support 1 may also be formed by two "C" shaped supports fixedly connected to each other. In other embodiments, the support 1 may further be made in other forms, as long as the upper and lower cover plates of the housing are omitted and support can be provided for the interior of the housing, no further examples will be given here.

In an embodiment, the upper flat part 11 is penetrated by a coolant channel 14 along the length direction thereof. The lower flat part 12 is penetrated by the coolant channel 14 along the length direction thereof. The connecting part 13 is penetrated by the coolant channel 14 along the length direction thereof.

In an embodiment, the support 1 may be formed by extrusion, and the coolant channel 14 may be formed at the same time.

### Embodiment 2

This embodiment provides a housing, which includes the support 1 described in Embodiment 1.

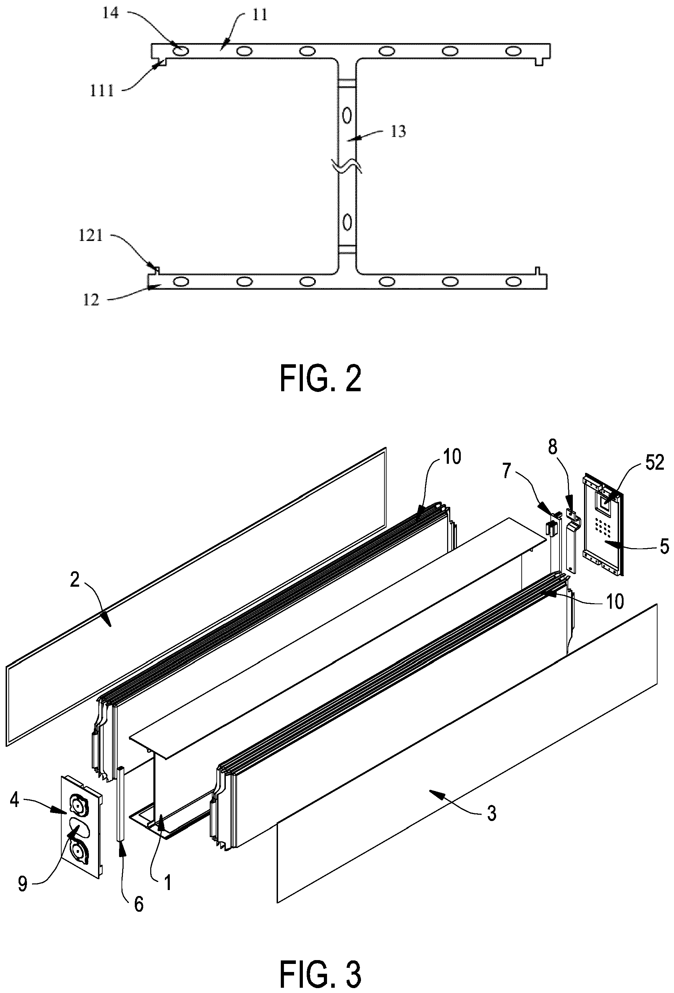

As shown in FIG. 3, the housing further includes a left side panel 2, a right side panel 3, a front cover 4, a rear cover 5, a front connecting frame 6, a rear connecting frame 7, a current collecting sampling plate 8 and an explosion-proof valve 9.

The left side panel 2 is welded at the first side of the support 1 and forms a first accommodation cavity with the support 1, and the right side panel 3 is welded at the second side of the support 1 and forms a second accommodation cavity with the support 1. The first side of the support 1 and the second side of the support 1 are opposite to each other. The front cover 4 and the rear cover 5 are respectively welded at the two ends of the support 1, thereby forming a housing-like structure with four sides sealed.

In an embodiment, the front cover 4 is provided with an explosion-proof valve 9; the rear cover 5 is provided with an explosion-proof valve 9. When the battery cell is undergoing thermal runaway, the high-temperature gas may be ejected toward a fixed direction to improve the explosion-proof performance of the housing.

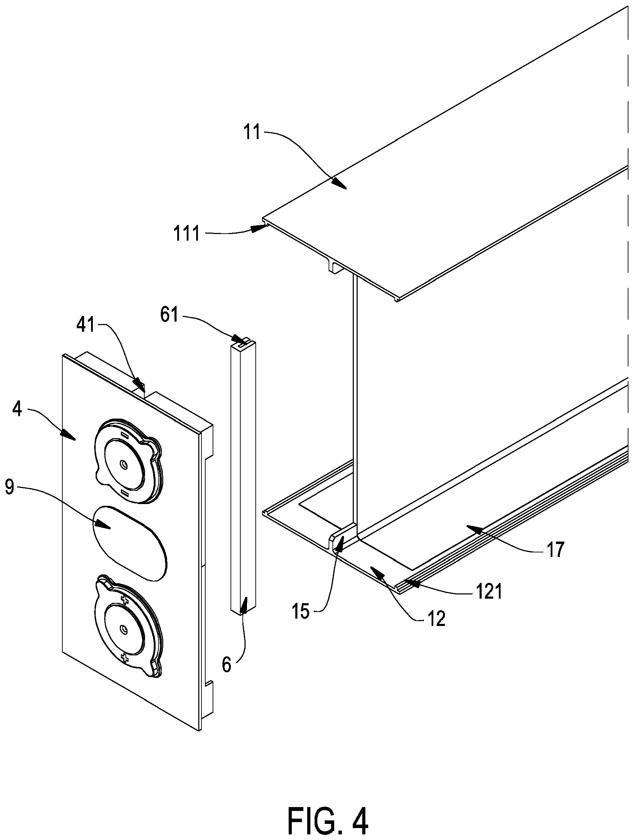

In an embodiment, as shown in FIG. 4 in conjunction with FIG. 1, two ends of the upper flat part 11 are provided with upper position-limiting protrusions 111, two ends of the lower flat part 12 are provided with lower position-limiting protrusions 121, the upper position-limiting protrusion 111 of the first end of the upper flat part 11 is opposite to the lower position-limiting protrusion 121 of the first end of lower flat part 12, the upper position-limiting protrusion 111 of the second end of the upper flat part 11 is opposite to the lower position-limiting protrusion 121 of the second end of the lower flat part 12. Two ends of the left side panel 2 abut against the upper position-limiting protrusion 111 of the first end of the upper flat part 11 and the lower position-limiting protrusion 121 of the first end of the lower flat part 12, so as to facilitate configuration and positioning and help to weld the left side panel 2 on the support 1. The two ends of the right side panel 3 respectively abut against the upper position-limiting protrusion 111 of the second end of the upper flat part 11 and the lower position-limiting protrusion 121 of the second end of the lower flat part 12, so as to facilitate configuration and positioning and help to weld the right side panel 3 on the support 1.

In an embodiment, as shown in FIG. 4, the housing further includes an insulating film 17. The insulating film 17 is attached to the upper flat part 11, the connecting part 13 and the lower flat part 12. The length of the insulating film 17 is the same as the length of the connecting part 13, and the length of the upper flat part 11 is the same as the length of the lower flat part 12 and greater than the length of the connecting part 13. In short, the insulating film 17 is attached in the first accommodation cavity and the second accommodation cavity for insulation between the battery cell 10 and the support 1.

As shown in FIG. 4, the front connecting frame 6 may be fixed on the front end of the support 1 and set to position the front cover 4 so as to facilitate the rapid positioning and configuration of the front cover 4 and improve assembly efficiency. In the meantime, when welding the front cover 4, it is possible to avoid the displacement of the front cover 4, so as to ensure welding accuracy and quality.

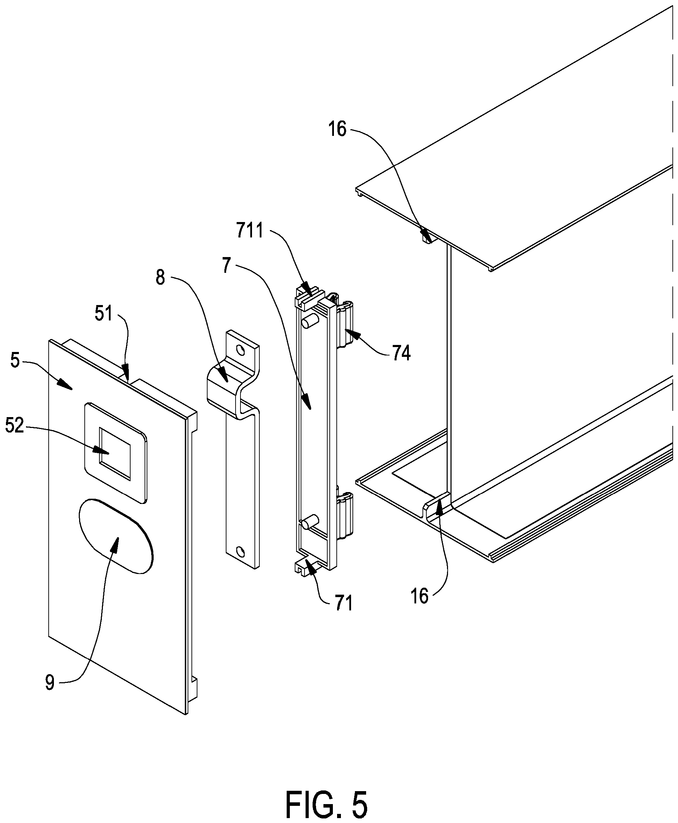

As shown in FIG. 5, the rear connecting frame 7 may be fixed at the rear end of the support 1 and set to position the rear cover 4, so that the rear cover 4 may be quickly positioned and configured to improve assembly efficiency. In the meantime, when welding the rear cover 4, it is possible to avoid the displacement of the rear cover 4, so as to ensure welding accuracy and quality.

In an embodiment, the front connecting frame 6 is an insulator. Similarly, the rear connecting frame 7 is an insulator.

In order to facilitate the fixed connection between the front connecting frame 6 and the support 1. One of the front connecting frame 6 and the support 1 is provided with a front protrusion 15, and the other is provided with a front engaging slot 61 which is engaged with the front protrusion 15, so that the front connecting frame 6 may be engaged at the front end of the support 1.

Exemplarily, the front protrusion 15 is set on the support 1. Specifically, the front protrusion 15 may be set on the upper flat part 11 and the lower flat part 12. The front connecting frame 6 is opened with a front engaging slot 61, and the front engaging slot 61 may be engaged on the front protrusion 15, thus realizing positioning and connection between the front connecting frame 6 and the support 1.

In order to facilitate the positioning and connection between the front cover 4 and the front connecting frame 6, the front cover 4 is opened with the front positioning slot 41. A front positioning block is provided on the front connecting frame 6, and the front positioning block may be engaged in the front positioning slot 41, thereby realizing the positioning of the front cover 4, so as to prevent dislocation of the front cover 4 during the welding process and to ensure welding accuracy and quality.

In this embodiment, as shown in FIG. 1 and FIG. 4, the front connecting frame 6 is a strip structure, at least part of the front connecting frame 6 serves as a front positioning block that may be engaged into the front positioning slot 41 on the front cover 4, and the front engaging slot 61 passes through the front connecting frame 6. In the assembly process, first the front connecting frame 6 is configured on the support 1. Under the circumstances, the front engaging slot 61 is engaged on the front protrusion 15, and then the front positioning slot 41 of the front cover 4 is fastened on the front connecting frame 6.

In order to facilitate the positioning and connection between the rear connecting frame 7 and the support 1, as shown in FIG. 1 and FIG. 5, one of the rear connecting frame 7 and the support 1 is provided with a rear protrusion 16, and the other is provided with a rear engaging slot 711 engaged with the rear protrusion 16, so that the rear connecting frame 7 may be engaged with the rear end of the support 1.

In an embodiment, the rear connecting frame 7 is provided with the rear engaging slot 711. Two rear engaging slots 711 are vertically spaced apart on the rear connecting frame 7, and the upper flat part 11 and the lower flat part 12 of the support 1 are provided with the rear protrusion 16. By engaging the rear engaging slot 711 on the rear protrusion 16 of the support 1, it is possible to realize the positioning and fixed connection between the rear connecting frame 7 and the support 1.

In order to facilitate the positioning and connection between the rear cover 5 and the rear connecting frame 7, as shown in FIG. 5, the rear cover 5 is opened with a rear positioning slot 51. A rear positioning block 71 is provided on the rear connecting frame 7, and the rear positioning block 71 may be engaged in the rear positioning slot 51 to avoid dislocation of the rear cover 5 during the welding process to ensure welding accuracy and quality.

In an embodiment, the rear engaging slot 711 is set on the rear positioning block 71, and the upper flat part 11 and the lower flat part 12 are respectively provided with the rear protrusion 16. In this embodiment, two rear positioning blocks 71 are vertically spaced apart on the rear connecting frame 7, and each rear positioning block 71 is opened with a rear engaging slot 711. In the assembly process, first the rear connecting frame 7 is configured on the support 1. Under the circumstances, the rear engaging slot 711 is set on the rear protrusion 16, then the rear cover 5 is configured on the rear connecting frame 7. Accordingly, the rear positioning slot 51 is engaged on the rear positioning block 71.

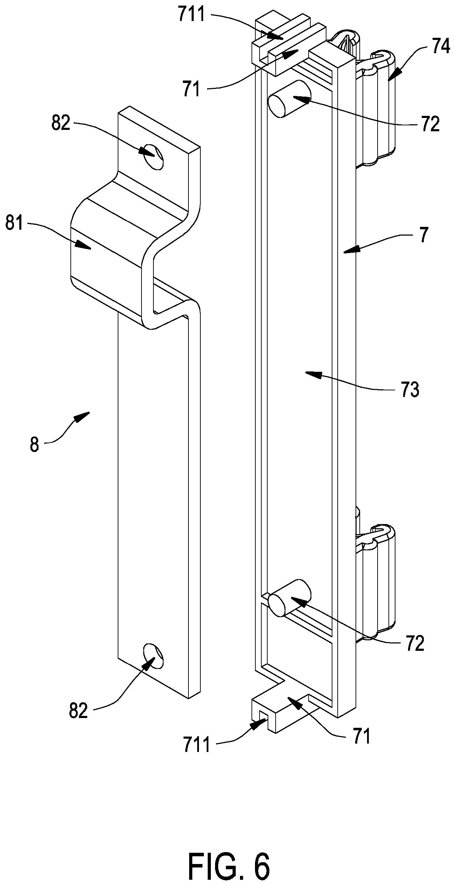

In order to facilitate sampling of battery modules, as shown in FIG. 5 and FIG. 6, a sampling protrusion 81 is set on current collecting sampling plate 8, the rear cover 5 is opened with a port 52, the current collecting sampling plate 81 may be positioned on the rear connecting frame 7, and part of the sampling protrusion 81 extends beyond the port 52.

In an embodiment, as shown in FIG. 6, one of the current collecting sampling plate 8 and the rear connecting frame 7 is provided with a positioning column 72, and the other is provided with a positioning hole 82 cooperating with the positioning column 72, so that the current collecting sampling plate 8 is positioned and configured on the rear connecting frame 7, in order to position and configure the current collecting sampling plate 8 on the rear connecting frame 7.

In an embodiment, the current collecting sampling plate 8 is opened with a positioning hole 82, and the rear connecting frame 7 is provided with a positioning column 72.

In an embodiment, after the current collecting sampling plate 8 and the rear connecting frame 7 are positioned and connected, they may be fixed by heat riveting. In other embodiments, the current collecting sampling plate 8 and the rear connecting frame 7 may also be fixed by integral injection molding.

In order to reduce the length of the housing, an embedding slot 73 is provided on the rear connecting frame 7, and the current collecting sampling plate 8 may be embedded in the embedding slot 73. When the current collecting sampling plate 8 and the rear connecting frame 7 are positioned and connected, the two mentioned above may be embedded, so the overall thickness of the current collecting sampling plate 8 and the rear the connecting frame 7 is less than the sum of the thicknesses of the two mentioned above.

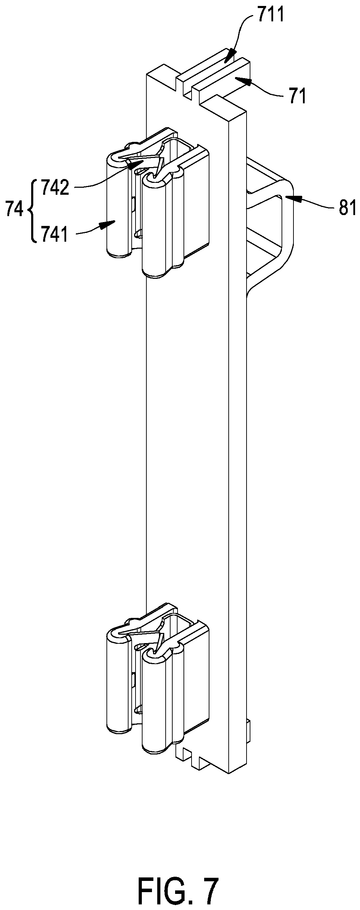

As shown in FIG. 7 to FIG. 8, since the rear connecting frame 7 is additionally connected with the current collecting sampling plate 8, the rear connecting frame 7 is subjected to a force in a non-uniform manner, which affects the engaging strength of the rear engaging slot 711 and the rear protrusion 16. Therefore, in order to improve the connection strength of the rear connecting frame 7 and the support 1, the rear connecting frame 7 is further provided with a claw 74, which may be clamped to the connecting part 13 of the support 1.

In an embodiment, two claws 74 are vertically spaced apart on the rear connecting frame 7 to ensure the connection strength of the rear connecting frame 7 and the support 1.

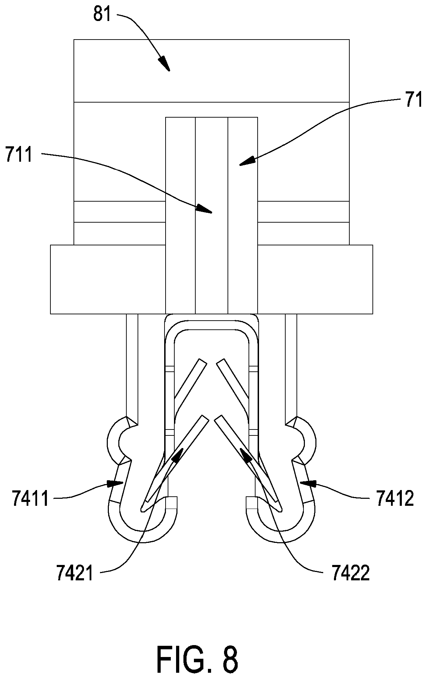

In an embodiment, as shown in FIG. 7 and FIG. 8, the claw 74 includes a supporting main body 741 and a clamping elastic piece 742. The supporting main body 741 includes a first supporting part 7411 and a second supporting part 7412. The first supporting part 7411 and the second supporting part 7412 are opposite to each other. The clamping elastic piece 742 includes a first elastic sheet 7421 and a second elastic sheet 7422. One end of the first elastic sheet 7421 is fixed on the first supporting part 7411, one end of the second elastic sheet 7422 is fixed on the second supporting part 7412, and the first elastic sheet 7421 and the second elastic sheet 7422 are set at an acute angle and the opening faces the connecting part 13. The minimum distance between the first elastic sheet 7421 and the second elastic sheet 7422 is less than the thickness of the connecting part 13 to ensure the clamping of the clamping elastic piece 742 to the connecting part 13.

In an embodiment, at least two clamping elastic pieces 742 are arranged on the supporting main body 741, and at least two clamping elastic pieces 742 are arranged at intervals along the deeply clamping direction to increase the clamping force of the claw 74.

In an embodiment, the end portion of the first supporting part 7411 is an arc-shaped surface; the end portion of the second supporting part 7412 is an arc-shaped surface. The arc-shaped surface structure may serve a guiding function to allow the connecting part 13 to be smoothly inserted into the claw 74 and improve the convenience of assembly.

### Embodiment 3

As shown in FIG. 3, this embodiment provides a pouch battery module, which includes a battery cell 10 and a housing described in Embodiment 2. The battery cell 10 is arranged in the first accommodation cavity and the second accommodation cavity respectively, and the battery cell 10 is a single battery cell or the battery cell 10 is a battery cell stack. By integrating the above-mentioned housing to the pouch battery module, the overall pouch battery module has good rigidity, the internal battery cell 10 is not easily deformed and has stable performance.

## Claims

1. A support, a cross-section of the support (1) being I-shaped and the support (1) comprising:
an upper flat part (11), which is configured to be used as an upper cover plate for a housing of a battery;
a lower flat part (12), which is arranged in parallel with the upper flat part (11), wherein the lower flat part (12) is configured to be used as a lower cover plate of the housing of the battery; and
a connecting part (13), wherein two ends of which are fixedly connected to the upper flat part and the lower flat part respectively.

2. The support according to claim 1, adopting at least one of the following configurations:
wherein the upper flat part (11) is penetrated by a coolant channel (14) along a length direction thereof;
the lower flat part (12) is penetrated by the coolant channel (14) along a length thereof; and
the connecting part (13) is penetrated by the coolant channel (14) along a length thereof.

3. The support according to claim 1, wherein the support (1) is an integrally formed structure; or the support (1) is formed by two "C" shaped supports fixedly connected to each other.

4. A housing, comprising a left side panel (2), a right side panel (3), a front cover (4), a rear cover (5) and the support (1) according to any one of claims 1-3, wherein the left side panel (2) is welded at a first side of the support (1) and forms a first accommodation cavity with the support (1), and the right side panel (3) is welded at a second side of the support (1) and forms a second accommodation cavity with the support (1), the front cover (4) and the rear cover (5) are respectively welded at two ends of the support (1), the first side of the support (1) and the second side of the support (1) are opposite to each other.

5. The housing according to claim 4, wherein the housing further comprises a front connecting frame (6) configured to position the front cover (4) and a rear connecting frame (7) configured to position the rear cover (5), the front connecting frame (6) is fixedly connected to a front end of the support (1); the rear connecting frame (7) is fixedly connected to a rear end of the support (1).

6. The housing according to claim 5, wherein the front connecting frame (6) is an insulator; the rear connecting frame (7) is an insulator.

7. The housing according to claim 5, wherein one of the front connecting frame (6) and the support (1) is provided with a front protrusion (15), and the other is provided with a front engaging slot (61) engaged with the front protrusion (15), so that the front connecting frame (6) is engaged with a first end of the support (1);
one of the rear connecting frame (7) and the support (1) is provided with a rear protrusion (16), and the other is provided with a rear engaging slot (711) engaged with the rear protrusion (16), so that the rear connecting frame (7) is engaged with a second end of the support (1).

8. The housing according to claim 7, wherein the front cover (4) is opened with a front positioning slot (41), a front positioning block is provided on the front connecting frame (6), and the front positioning block is engaged in the front positioning slot (41);
the rear cover (5) is opened with a rear positioning slot (51), a rear positioning block (71) is provided on the rear connecting frame (7), and the rear positioning block (71) is engaged in the rear positioning slot (51).

9. The housing according to claim 8, wherein the rear engaging slot (711) is set on the rear positioning block (71), and the upper flat part (11) and the lower flat part (12) are respectively provided with the rear protrusion (16);
the front engaging slot (61) is disposed on the front positioning block, and the upper flat part (11) and the lower flat part (12) are respectively provided with the front protrusion (15).

10. The housing according to claim 9, wherein the front connecting frame (6) is a strip structure, at least a part of the front connecting frame (6) serves as the front positioning block that is engaged into the front positioning slot (41) on the front cover (4), and the front engaging slot (61) passes through the front connecting frame (6).

11. The housing according to claim 5, wherein the housing further comprises a current collecting sampling plate (8), a sampling protrusion (81) is set on the current collecting sampling plate (8), the rear cover (5) is opened with a port (52), the current collecting sampling plate (81) is positioned on the rear connecting frame (7), and a part of the sampling protrusion (81) extends beyond the port (52).

12. The housing according to claim 11, wherein one of the current collecting sampling plate (8) and the rear connecting frame (7) is provided with a positioning column (72), and the other is provided with a positioning hole (82) cooperating with the positioning column (72), so that the current collecting sampling plate (8) is positioned and configured on the rear connecting frame (7).

13. The housing according to claim 11, wherein an embedding slot (73) is provided on the rear connecting frame (7), and the current collecting sampling plate (8) is embedded in the embedding slot (73).

14. The housing according to claim 5, wherein a claw (74) is further disposed on the rear connecting frame (7), and the claw (74) is clamped to the connecting part (13) of the support (1).

15. The housing according to claim 14, wherein the claw (74) comprises:
a supporting main body (741), comprising a first supporting part (7411) and a second supporting part (7412), wherein the first supporting part (7411) and the second supporting part (7412) are opposite to each other;
a clamping elastic piece (742), comprising a first elastic sheet (7421) and a second elastic sheet (7422), wherein one end of the first elastic sheet (7421) is fixed on the first supporting part (7411), one end of the second elastic sheet (7422) is fixed on the second supporting part (7412), and the first elastic sheet (7421) and the second elastic sheet (7422) are set at an acute angle and an opening between the first elastic sheet (7421) and the second elastic sheet (7422) faces the connecting part (13), a minimum distance between the first elastic sheet (7421) and the second elastic sheet (7422) is less than a thickness of the connecting part (13).

16. The housing according to claim 15, wherein the supporting main body (741) is provided with at least two of the clamping elastic pieces (742), and the at least two clamping elastic pieces (742) are arranged at intervals along a depth direction of the opening.

17. The housing according to claim 15, wherein an end portion of the first supporting part (7411) is an arc-shaped surface; an end portion of the second supporting part (7412) is an arc-shaped surface.

18. The housing according to claim 4, wherein the front cover (4) and the rear cover (5) are respectively provided with explosion-proof valves (9).

19. The housing according to claim 4, further comprising an insulating film (17), wherein the insulating film (17) is attached to the upper flat part (11), the connecting part (13) and the lower flat part (12), a length of the insulating film (17) is the same as a length of the connecting part (13), and a length of the upper flat part (11) is the same as a length of the lower flat part (12) and greater than the length of the connecting part (13).

20. The housing according to claim 4, wherein a first end of the upper flat part (11) and a second end of the upper flat part (11) are respectively provided with an upper position-limiting protrusion (111), and a first end and a second end of the lower flat part (12) are respectively provided with a lower position-limiting protrusion (121) opposite to the upper position-limiting protrusion (111), and two ends of the left side panel (2) are respectively abutted against the upper position-limiting protrusion (111) of a first end of the support (1) and the lower position-limiting protrusion (121); two ends of the right side panel (3) are respectively abutted against the upper position-limiting protrusion (111) of a second end of the support (1) and the lower position-limiting protrusion (121).

21. A pouch battery module, comprising a battery cell (10) and the housing according to any one of claims 4-20, wherein the first accommodation cavity and the second accommodation cavity are respectively provided with the battery cell (10), and the battery cell (10) is a single cell or the battery cell (10) is a cell stack.
